# EUROPEAN PATENT SPECIFICATION

(11) **EP 1 319 494 B1**
(45) Date of publication and mention of the grant of the patent: **07.03.2007**
(21) Application number: 02080207.0
(22) Date of filing: 10.12.2002
(51) Int. Cl.: B29C 51/44, B65D 81/38, B29L 24/00

(54) **Double-walled beaker and a method for producing same**
Doppelwandiger Becher und Verfahren zu dessen Hersellung
Gobelets à double paroi et procédé de production associé

(30) Priority: 17.12.2001 NL 1019586
(43) Date of publication of application: 18.06.2003
(73) Proprietor: RPC Packaging Holding B. V., 7418 AW Deventer (NL)
(72) Inventor: Peters, Henny, Machen, Newpport, Gwent. NPI SRD (GB); Kloeze, Hendrik Jan, 7431 BE Diepenveen (NL)
(74) Representative: 't Jong, Bastiaan Jacob

(56) References cited:
- DE-A- 1 704 347
- GB-A- 1 219 382
- US-A- 3 572 007
- US-A- 6 109 518

## Description

The invention relates to a method for manufacturing a double-walled beaker according to the preamble of claim 1. The advantage of a double-walled beaker is that the wall is insulated, whereby the heat of for instance the hot coffee is less noticeable on the outside of the beaker.

Techniques are known for example from DE-A-1704347 wherein inner and outer shells are formed in a strip of plastic which is brought to softening temperature, which shells are then punched out. A punched-out inner shell is then placed in a punched-out outer shell, whereafter the peripheral edge is beaded so that a double-walled beaker is created.

Since the inner shell has to fit into the outer shell, the dimensions of the inner shell differ from those of the outer shell. It is therefore usual in the known art for the inner shells to be punched out with a first punch die and the outer shells with a second punch die, wherein the first punch die and second punch die differ from each other. The punched-out inner and outer shells are then stacked separately, thus resulting in a stack of inner shells and a stack of outer shells.

These separate stacks of inner shells and outer shells have the drawback that, during assembly to a double-walled beaker, an inner shell and an outer shell have to be removed respectively from each stack. This removal causes problems and therefore affects the whole process.

It is an object of the invention to prevent the above stated drawback.

This objective is achieved with a method according to the preamble which is characterized in that
- both inner shells and outer shells are punched out with the same punch die.

Since the inner shells as well as the outer shells can be punched out with the same punch die, firstly the synchronization between the strip of plastic with the inner and outer shells formed therein and the punching device is no longer important, since it no longer makes any difference whether a punch die punches out an outer shell or an inner shell. This has the further advantage that the tools used are identical and no longer have to be specifically made for either an inner shell or an outer shell.

In preference each punch die punches out an inner shell and an outer shell alternately. Each punch die thus supplies in alternating manner an outer shell and an inner shell which can then be directly formed in twos into a double-walled beaker.

In another embodiment according to the method the punched-out inner shells and outer shells are heaped in stacks. It is recommended herein that the stacks comprise alternately inner shells and outer shells. This has the advantage that, during forming of a double-walled beaker, an inner and outer shell can be taken simultaneously from a single stack from which a double-walled beaker can be formed by arranging a beaded edge such that the edge of the inner shell and the edge of the outer shell are curled together.

In known double-walled beakers the inner main dimension of the opening formed by the first edge together with twice the length of the first edge is considerably larger than the inner main dimension of the opening formed by the second edge together with twice the length of the second edge. By making these two dimensions substantially the same, both inner shells and outer shells can thus be punched out using only the one punch die during the manufacturing process.

These and other features of the invention are further elucidated with reference to the annexed drawings.
Figure 1 shows a double-walled beaker manufactured according to the invention.
Figures 2A and 2B show the edge of a double-walled beaker manufactured according to the prior art.
Figures 3A and 3B show the edge of a double-walled beaker according to the invention as shown in figure 1.
Figure 4 shows schematically the method according to the invention.

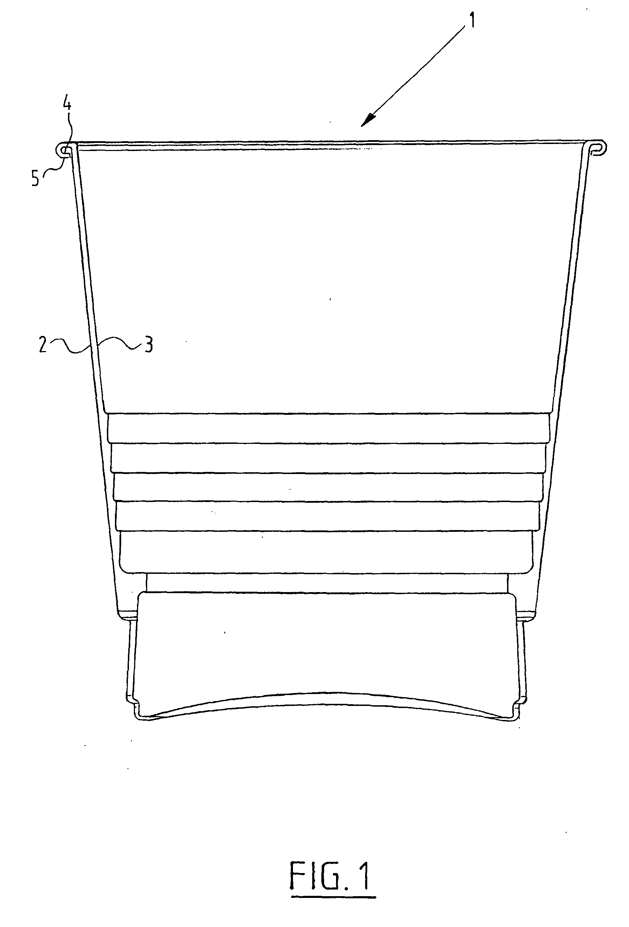

Figure 1 shows a double-walled beaker 1 manufactured according to the invention. This double-walled beaker has an outer shell 2 and an inner shell 3 placed therein. Outer shell 2 has a bent first edge 4 and inner shell 3 has a second bent edge 5.

As shown in figure 1, the first bent edge 4 and second bent edge 5 are formed into a beaded edge such that edge 4 is curled into edge 5.

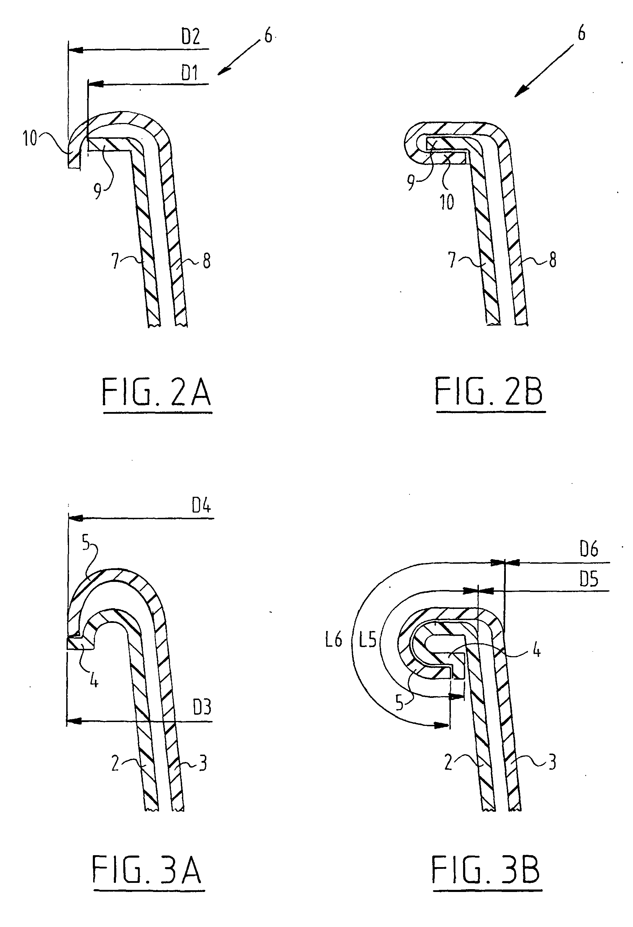

Shown in figures 2A and 2B is an edge of a prior art double-walled beaker. This prior art beaker likewise has an outer shell 7 and an inner shell 8. Figure 2A shows the situation where a punched-out inner shell is placed in a punched-out outer shell 7. Figure 2B shows the beaker of figure 2A, but then with a curled edge.

Clearly shown is that the bent edge 9 of outer shell 7 has a smaller diameter D1 than the diameter D2 of the bent edge 10 of inner shell 8.

Figures 3A and 3B show an edge of a double-walled beaker 1 such as this can be embodied according to the invention. Figure 3A shows the edge immediately after inner shell 3 has been placed in outer shell 2. Clearly visible is that the diameter D3 of the first bent edge 4 is substantially equal to the diameter D4 of the second bent edge 5. Inner shell 3 and outer shell 2 can thus be punched out with the same punch die.

Shown in figure 3B is the edge of figure 3A, but then in the beaded state. For at least this embodiment it is the case that the inner diameter D5 of outer shell 2 together with twice the length L5 of the bent edge 4 is substantially equal to the inner diameter D6 of inner shell 3 together with twice the length L6 of the bent second edge 5.

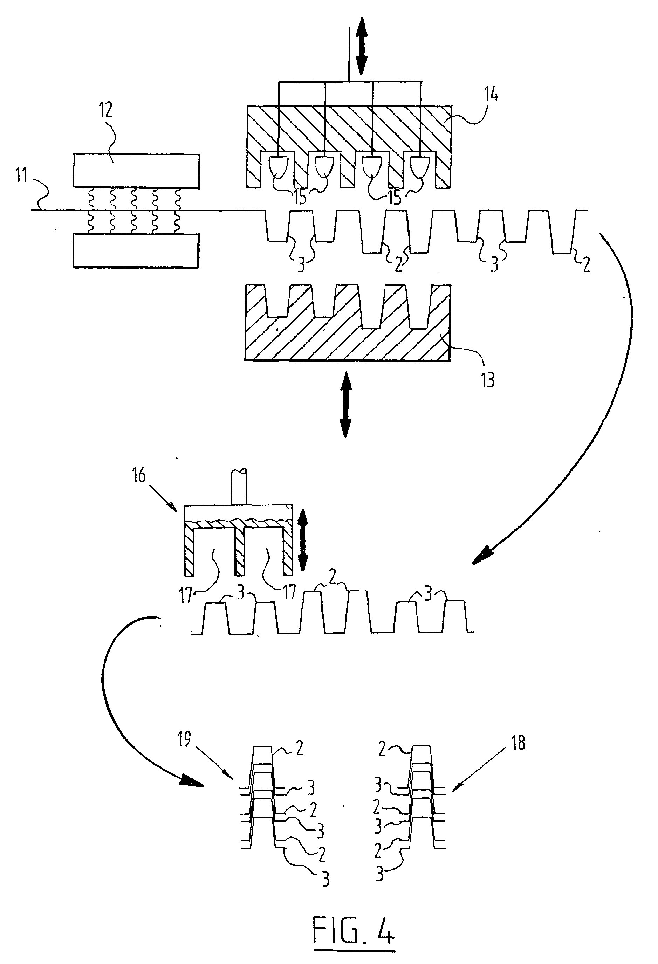

Figure 4 shows schematically the method according to the invention. A strip of plastic 11 is supplied and subsequently heated by heating means 12 to above the softening temperature of the plastic. The softened part of plastic strip 11 is then clamped between a lower mould 13 and an upper mould 14. Plugs 15 subsequently form the first basic shape in the softened plastic, whereafter the definitive shape is brought about by means of vacuum.

After cooling in the mould, lower mould 13 and upper mould 14 are released and the plastic strip is advanced further, whereafter outer shells 2 and inner shells 3 can once again be formed by lower mould 13 and upper mould 14.

The strip of plastic 11 with outer shells 2 and inner shells 3 formed therein is then transported to a punching device 16. This punching device 16 has two identical punch dies 17 with which outer shells 2 and inner shells 3 are alternately punched out. Stacks 18 and 19 are then hereby formed which each comprise outer shells 2 and inner shells 3 in alternating manner. These stacks 18, 19 can then be transported to a device where two shells 2, 3 can be formed into a double-walled beaker by means of a beading operation.

## Claims

1. Method for manufacturing a double-walled beaker (2, 3) with an outer shell (2) and an inner shell (3) arranged therein, which method comprises the following steps of:
- providing a single strip (11) of plastic;
- at least partially heating (12) the plastic to at least the softening temperature;
- forming inner shells (3) and outer shells (2) in the softened part of the same single strip of plastic;
- punching out the inner shells and outer shells;
**characterized in that**
- both inner shells (3) and outer shells (2) are punched out with the same punch die (17).

2. Method as claimed in claim 1, wherein during the punching each punch die (17) alternately punches out an outer shell (2) and an inner shell (3).

3. Method as claimed in claim 1 or 2,
**characterized by**
heaping the punched-out inner shells (2) and outer shells (3) in stacks.

4. Method as claimed in claim 3, wherein the stacks alternately comprise inner shells (3) and outer shells (2).

5. Method as claimed in any of the foregoing claims,
**characterized by**
placing together a punched-out inner shell (3) and outer shell (2) and subsequently arranging a beaded edge such that the edge (5) of the inner shell (3) and the edge (4) of the outer shell (2) are curled together.

## Patentansprüche

1. Verfahren zum Herstellen eines doppelwandigen Bechers (2, 3) mit einer Außen-Schale (2) und einer darin angeordneten Innen-Schale (3), wobei das Verfahren die folgenden Schritte aufweist:
- Bereitstellen eines einzelnen Streifens (11) aus Kunststoff,
- wenigstens teilweises Erwärmen (12) des Kunststoffes auf wenigstens die ErweichungsTemperatur,
- Ausbilden der Innen-Schalen (3) und der Außen-Schalen (2) in dem erweichten Abschnitt desselben Kunststoff-Streifens,
- Ausstanzen der Innen-Schalen und der Außen-Schalen,
**dadurch gekennzeichnet, dass**
- sowohl die Innen-Schalen (3) als auch die Außen-Schalen (2) mit derselben Stanzmatrize (17) ausgestanzt werden.

2. Verfahren gemäß Anspruch 1, wobei jede Stanzmatrize (17) während des Stanzens abwechselnd eine Außen-Schale (2) und eine Innen-Schale (3) ausstanzt.

3. Verfahren gemäß Anspruch 1 oder 2
**gekennzeichnet durch**
Anhäufen der ausgestanzten Innen-Schalen (2) und Außen-Schalen (3) in Stapeln.

4. Verfahren gemäß Anspruch 3, wobei die Stapel abwechselnd Innen-Schalen (3) und Außen-Schalen (2) aufweisen.

5. Verfahren gemäß einem der vorhergehenden Ansprüche,
**gekennzeichnet durch**
Zusammenplatzieren einer ausgestanzten Innen-Schale (3) und einer ausgestanzten Außen-Schale (2) und nachfolgendes Ausbilden eines gefalzten Randes, so dass der Rand (5) der Innen-Schale (3) und der Rand (4) der Außen-Schale (2) zusammengebördelt sind.

## Revendications

1. Procédé pour fabriquer un gobelet à double paroi (2, 3) ayant une enveloppe extérieure (2) et une enveloppe intérieure (3) agencée à l'intérieur de celle-ci, lequel procédé comporte les étapes suivantes consistant à :
- fournir une bande unique (11) en matière plastique,
- chauffer au moins partiellement (12) la matière plastique au moins jusqu'à la température de ramollissement,
- former des enveloppes intérieures (3) et des enveloppes extérieures (2) dans la partie ramollie de la susdite bande unique en matière plastique,
- découper à la matrice les enveloppes intérieures et les enveloppes extérieures,
**caractérisé en ce que**
- à la fois les enveloppes intérieures (3) et les enveloppes extérieures (2) sont découpées à la matrice en utilisant la même matrice de perforation (17).

2. Procédé selon la revendication 1, dans lequel pendant la découpe, chaque matrice de perforation (17) découpe en alternance une enveloppe extérieure (2) et une enveloppe intérieure (3).

3. Procédé selon la revendication 1 ou 2, **caractérisé par** l'étape consistant à entasser les enveloppes intérieures (2) et les enveloppes extérieures (3) découpées à la matrice, en formant des piles.

4. Procédé selon la revendication 3, dans lequel les piles comportent en alternance des enveloppes intérieures (3) et des enveloppes extérieures (2).

5. Procédé selon l'une quelconque des revendications précédentes, **caractérisé par** l'étape consistant à placer ensemble une enveloppe intérieure (3) et une enveloppe extérieure (2) découpées à la matrice et agencer ensuite un bord rabattu de telle sorte que le bord (5) de l'enveloppe intérieure (3) et le bord (4) de l'enveloppe extérieure (2) sont enroulés ensemble.
